# FASCICULE DE BREVET EUROPEEN

(11) **EP 2 935 136 B1**
(45) Date de publication et mention de la délivrance du brevet: **28.06.2017**
(21) Numéro de dépôt: 13808138.5
(22) Date de dépôt: 02.12.2013
(51) Int. Cl.: C03C 3/091, C03C 8/14, C03C 17/00, F24C 7/08, F24C 15/10

(54) **ARTICLE VITROCERAMIQUE A AFFICHAGE LUMINEUX**
GLASKERAMIKARTIKEL MIT LEUCHTANZEIGE
GLASS-CERAMIC ARTICLE HAVING A LUMINOUS DISPLAY

(30) Priorité: 21.12.2012 FR 1262584
(43) Date de publication de la demande: 28.10.2015
(73) Titulaire: Eurokera S.N.C., 02400 Château-Thierry (FR)
(72) Inventeur: LECOMTE, Emmanuel, F-02400 Nesles La Montagne (FR); AULAGNON, Nicolas, F-02650 Mezy Moulins (FR); VILATO, Pablo, F-75014 Paris (FR)
(74) Mandataire: Saint-Gobain Recherche
(86) Numéro de dépôt international: PCT/FR2013/052909
(87) Numéro de publication internationale: WO 2014/096599

(56) Documents cités:
- EP-A1- 1 770 071
- WO-A2-03/084891
- DE-A1-102011 050 870
- DE-C1- 19 721 737
- FR-A1- 2 782 318
- FR-A1- 2 885 995
- FR-A1- 2 926 544
- FR-A1- 2 954 938
- US-A- 5 326 728
- US-A1- 2010 009 837
- US-B1- 6 525 300

## Description

La présente invention concerne le domaine des vitrocéramiques. Plus précisément, elle concerne un article (ou produit ou substrat) en vitrocéramique, notamment une plaque vitrocéramique, destiné(e) en particulier à couvrir ou recevoir des éléments de chauffage, ledit article étant pourvu d'un affichage lumineux (ou d'au moins une zone lumineuse) en au moins une zone choisie de l'article.

Les ventes d'articles tels que des plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants.

Les principales plaques actuelles sont de couleur sombre, en particulier noires, colorées par exemple en utilisant de l'oxyde de vanadium ajouté aux matières premières du verre-mère avant la fusion, cet oxyde conférant après céramisation une teinte orange-brune soutenue liée à une réduction du vanadium. D'autres colorants, tels que les oxydes de cobalt et de manganèse, peuvent également être utilisés. Avec un coefficient de transmission faible en dessous de 600nm, ces plaques permettent surtout la visibilité d'éléments rouges comme les éléments chauffants portés à haute température ou encore les affichages lumineux à base de diodes électroluminescentes monochromatiques de couleur rouge. Des plaques vitrocéramiques plus transparentes (telles que les vitrocéramiques KeraVision ou KeraResin, commercialisées par la société EuroKera), ou d'autres plaques (telles que les vitrocéramiques Keraspectrum) existent également, permettant l'affichage d'autres couleurs.

Les éclairages lumineux utilisés avec les plaques vitrocéramiques peuvent permettre de signaler des commandes ou des zones de chauffe, d'afficher des données, de mettre en évidence des décors, etc. Les sources lumineuses utilisées sont généralement installées sous la plaque et de façon à pourvoir éclairer des motifs (par exemple un pictogramme ou symbole signalant la mise en marche des zones de chauffe ou motif ON/OFF) généralement déposés par sérigraphie en face supérieure de la vitrocéramique. De manière générale, il est souhaitable que ces motifs, généralement de petites tailles, apparaissent avec suffisamment de netteté et de contraste et puissent être aisément localisés, qu'ils se trouvent à l'état activé (éclairés) ou à l'état non activé (éteint).

Il est connu de déposer des motifs destinés à être éclairés par sérigraphie avec le même type d'émail que celui habituellement utilisé pour les décors de plaque de cuisson en face supérieure de la vitrocéramique, par exemple un émail comprenant 70% en poids de fritte de verre et 30% en poids de pigments noirs, la fritte de verre étant en particulier à base de silice SiO₂ (présent par exemple à 42% en poids de la fritte), de trioxyde de bore B₂O₃ (par exemple à 28 % en poids), et d'alumine Al₂O₃ (par exemple à 18 % en poids). Cependant, lorsque la source lumineuse disposée en face inférieure de la vitrocéramique est allumée (émettant par exemple une lumière rouge), les contours délimités par l'émail sérigraphié peuvent ne pas apparaitre nets car la lumière diffuse au travers de l'émail, dégradant ainsi la définition du motif représenté. Les picots en face inférieure de la vitrocéramique peuvent en outre être apparents au niveau des motifs par transparence et peuvent induire une distorsion optique de la lumière de la source lumineuse.

Une façon de remédier à ces problèmes consiste notamment à déposer par sérigraphie de la peinture noire en face inférieure de la plaque, en regard du motif de la face supérieure. Il est également possible d'associer à la peinture noire une résine de même indice de réfraction que la vitrocéramique pour limiter l'effet de la distorsion optique due aux picots. Cependant, l'alignement du motif à base d'émail sérigraphié en face supérieure de la vitrocéramique avec celui à base de peinture sérigraphié en face inférieure de la vitrocéramique, cet alignement étant nécessaire à l'obtention des résultats recherchés, est très difficile à réaliser industriellement.

Un autre art antérieur dans lequel une peinture blanche est cette fois mise sur toute la face inférieure de la vitrocéramique est publié dans la demande de brevet WO03/08489.

La présente invention a donc cherché une solution simple à mettre en oeuvre et efficace permettant de préserver la netteté des contours des motifs lumineux (c'est-à-dire destinés à être éclairés) apparaissant en face supérieure de la vitrocéramique, lorsque lesdits motifs sont éclairés par une ou des sources lumineuses (notamment situées en face inférieure de la vitrocéramique), de manière comparable à ce qui est observé sans éclairage, cette solution permettant également d'identifier clairement les motifs à l'état non actif et empêchant la visibilité des picots situés en face inférieure de la vitrocéramique ainsi que l'effet de distorsion induit par ces picots.

Ce but est atteint par l'article (ou produit) en vitrocéramique, en particulier la plaque vitrocéramique, selon l'invention, destiné(e) notamment à couvrir ou recevoir des éléments de chauffage (l'article selon l'invention étant en particulier une plaque de cuisson), ledit article étant pourvu d'au moins une zone (à vocation) lumineuse (ou zone destinée à être éclairée), en particulier une zone d'affichage d'information (par exemple une zone indiquant par un symbole ou pictogramme, ou par des termes, etc. l'état de marche ou non d'une ou plusieurs zones de chauffe, ou zone ON/OFF), comprenant au moins un motif lumineux, ledit article comprenant au moins un substrat vitrocéramique, au moins une source lumineuse (destinée à, et placée de façon à, éclairer le motif, cette source étant en particulier placée sous la face inférieure du substrat), en particulier au moins une diode électroluminescente, et au moins un revêtement en émail recouvrant au moins une partie de ladite zone (l'émail étant déposé en particulier en face supérieure du substrat, notamment par sérigraphie) et au sein duquel une épargne est réalisée à la forme dudit motif, la composition dudit émail comprenant au moins une fritte de verre, au moins un pigment, et éventuellement au moins un véhicule ou medium, ladite fritte de verre présentant la composition suivante (ou comprenant les constituants suivants dans les limites définies ci-après, bornes comprises), les proportions étant exprimées en pourcentages pondéraux (pourcentages en poids, ou pourcentages massiques, par rapport au poids total de la fritte):

| | |
|---|---|
| SiO₂ | 40 - 55% |
| Al₂O₃ | 0 - 10% |
| B₂O₃ | 25 - 55% |
| Na₂O | 0 - 5% |
| K₂O | 0 - 5% |
| Li₂O | 0 - 10%, |

le taux de pigment(s) étant en outre de 40 à 65 % en poids du mélange fritte/pigments (et de préférence de 45 à 60 % en poids), l'article comprenant en outre une zone diffusante en regard dudit revêtement en émail.

Conformément à la présente invention, on dépose donc, notamment par sérigraphie, afin de définir les motifs à usage lumineux destinés par exemple à l'affiche d'informations ou de commandes sur des vitrocéramiques, telles que des plaques de cuisson, un émail formé d'une fritte de composition particulière, non connu(e) pour le revêtement de telles plaques, et présentant en outre un taux de pigments plus élevé que les émaux habituellement utilisés, sur une surface (ou zone), en particulier en face supérieure de la vitrocéramique, devant incorporer le motif recherché, ce motif étant obtenu en pratiquant une épargne de la forme correspondante dans le revêtement émaillé déposé, et on combine ce revêtement sur une face du substrat avec une zone diffusante en regard du revêtement émaillé, en particulier entre la zone émaillée et la source lumineuse devant l'éclairer, et notamment sur la face opposée du substrat (en particulier sur/sous la face inférieure), cette zone diffusante étant en particulier de la même forme et/ou dimension (ou approximativement de la même forme et/ou dimension) que le revêtement émaillé, sans qu'il soit pour autant nécessaire d'aligner parfaitement les deux zones, la combinaison ainsi réalisée ayant pour effet que la lumière émise par la source lumineuse, concentrée au niveau du motif, diffuse uniquement dans l'épargne et que les contours du motif obtenu sont particulièrement nets sans pour autant rendre perceptibles les picots ou éléments situés sous le motif.

L'émail tel que défini appliqué sur la face supérieure d'une vitrocéramique noire présente à l'état non éclairé une opacité comparable à celle d'un émail traditionnel pour le revêtement de plaques de cuisson, et, lorsque l'émail est exposé à la lumière, en particulier la lumière rouge, utilisée pour l'éclairage des zones concernées de la vitrocéramique, présente une opacité notablement supérieure à celle des émaux traditionnels pour plaques de cuisson, la sérigraphie en face inférieure de la vitrocéramique d'une peinture noire étant dans ce cas superflue.

L'émail peut être déposé facilement, en particulier par sérigraphie, ou encore par décalcomanie ou jet d'émail, et permet d'obtenir une couche mince (avantageusement de 1 à 6 microns après cuisson, en particulier de 2 à 5 microns) opaque, sans tressaillement ou craquèlements (la composition présentant notamment un faible coefficient de dilatation). La fritte de verre est compatible avec un dépôt de faible épaisseur, et permet une teneur en pigment(s) dans l'émail compatible avec l'effet de masquage recherché (de préférence pour une sérigraphie d'une épaisseur de 2 à 5 microns après cuisson), sans tressaillement ni désagrégation de l'émail déposé sur le substrat verrier. La viscosité de la composition d'émail permet en outre un bon étalement assurant un aspect relativement brillant et lisse de l'émail dans le produit final, la couche obtenue présentant une bonne tenue mécanique. L'émail peut être avantageusement cuit (en reprise) sur le substrat céramisé, à des températures de l'ordre de 700 à 800°C généralement utilisées pour le traitement thermique de l'émail, sans risque d'irisation, ou il peut être avantageusement déposé sur un verre précurseur (ou verre-mère) avant céramisation et être cuit lors de la céramisation.

L'émail présente avantageusement la composition telle que définie selon l'invention. Il est notamment formé (avant application sur le substrat et cuisson) d'une poudre comprenant une fritte de verre (ou particules de verre, devant former la matrice vitreuse) et des pigments (en tant que colorants notamment, ces pigments pouvant éventuellement faire partie de la fritte), la fritte et les pigments étant à base d'oxydes métalliques, et d'un médium ou « véhicule » permettant l'application et l'adhésion préalable de l'émail sur un substrat.

De préférence, la fritte de verre de la composition d'émail comprend un taux en SiO₂ variant de 45 à 50%, et/ou un taux en Al₂O₃ variant de 2 à 8 %, avantageusement de 3 à 6 %, et/ou un taux en B₂O₃ variant de 27 à 50 %, avantageusement de 27 à 45 %, ce taux pouvant être supérieur à 30%, notamment supérieur à 31 %, voire supérieur à 32 %, voire même et avantageusement supérieur à 33 % et en particulier supérieur à 34 %.

De manière préférée également, la fritte de verre comprend une teneur en Na₂O variant de 2 à 3 %, et/ou une teneur en K₂O variant de 0,5 à 3%, avantageusement de 1 à 2 %, et/ou une teneur en Li₂O variant de 2 à 6%, avantageusement de 3 à 5 %.

De préférence encore, la composition d'émail est dénuée d'au moins l'un des éléments suivants : ZrO₂, BaO, MgO, CaO et SrO, afin de présenter de bonnes propriétés en termes de sécurité de manipulation et de viscosité, etc. En outre, lorsque l'émail comprend du TiO₂, son taux dans la fritte est inférieur à 5%, avantageusement inférieur à 2%, voire même inférieur à 1% en poids.

De manière préférée, la fritte de verre de la composition d'émail sélectionnée est constituée de :

| | |
|---|---|
| SiO₂ | 45 - 50 %, |
| Al₂O₃ | 2 - 8 %, avantageusement 3-6%, |
| B₂O₃ | 27 - 50%, avantageusement 27-45%, |
| Na₂O | 2 - 3% |
| K₂O | 0.5 - 3 %, avantageusement 1-2%, |
| Li₂O | 2 - 6 %, avantageusement 3-5%. |

Outre la fritte de verre (ou particules de verre) de composition précédemment explicitée, l'émail défini selon l'invention peut également comprendre d'autres composants. L'émail selon l'invention comprend notamment au moins des pigments comme déjà indiqué précédemment, le taux de pigment(s), généralement ajoutés à la fritte, dans l'ensemble fritte(s)/pigment(s) de l'émail étant généralement compris entre 40 et 65 % en poids (bornes incluses), et de préférence entre 45 et 60 %, par rapport à l'ensemble fritte(s)+pigment(s). Les pigments peuvent notamment être choisis (en fonction notamment de la coloration souhaitée) parmi les composés contenant des oxydes métalliques tels que des oxydes de chrome, des oxydes de cuivre, des oxydes de fer, des oxydes de cobalt, des oxydes de nickel, des oxydes de zinc, des oxydes de manganèse, des oxydes de cérium, des oxydes de titane, voire à base d'alumine, etc. et /ou peuvent être choisis parmi les chromates de cuivre, les chromates de cobalt, etc.

L'émail défini selon l'invention comprend de préférence au moins un pigment noir opaque, par exemple à base d'oxydes de chrome, de fer, de cobalt et de nickel, ou spinelles de chrome et de cuivre Cr-Cu (tels que les pigments noirs commercialisés par la société Ferro™ sous la référence spinelle V7709 ou par la société Sheperd Colors sous la référence BK1G, etc.). L'émail peut également comprendre avantageusement des pigments à base de MnO₂, Fe₂O₃ et/ou CoO, ou encore des pigments (couleurs) à base de : NiO (vert), Cr₂O₃ (vert), TiO₂ (blanc), spinelle Cr-AI (rose), Sn-Sb-V (gris), Ti-Sb-Ni (jaune), Zr-V (jaune), spinelle Co-Zn-Al (bleu), spinelle Zn-Fe-Cr (brun), silicates comme le grenat Ca-Cr-Si (vert), le Ca-Sn-Si-Cr (rose), le zircon Zr-Si-Fe (rose), le Co-Zn-Si (bleu foncé), et/ou le Co-Si (bleu foncé), etc.

La fritte de verre et les pigments se présentent généralement sous forme de poudre avant d'être mis en suspension dans un médium. La granulométrie de l'ensemble fritte(s)/pigment(s) sous forme de poudre est généralement choisie de façon à ce qu'au moins 90% en poids des particules formant la poudre présentent un diamètre inférieur à 20 µm, notamment inférieur à 10 µm. De préférence, la fritte de verre et le(s) pigment(s) sont formés de particules de granulométrie variant de 1 à 6 microns, cet émail, avec un taux de pigment(s) de 40 à 65 % en poids, de préférence de 45 à 60 %, en particulier d'environ 50%, permettant d'obtenir une opacité suffisante sans devoir poser une épaisseur trop importante, limitant ainsi la différence de coefficient de dilatation entre le substrat et l'émail, ce qui contribue à éviter le tressaillement (craquellement de la couche d'émail lors de son refroidissement).

La fritte de verre peut être en particulier obtenue par fusion à haute température (plus de 1000°C) d'un mélange de matières premières (naturelles ou synthétiques) appropriées. La fritte est ensuite broyée (par exemple aux environs de 10-13 microns) et/ou microbroyée (ou attritée, par exemple aux alentours de 3-4 microns), généralement dans un solvant tel que l'éthanol (que l'on évapore par la suite) afin d'obtenir notamment une poudre, les pigments étant le cas échéant additionnés à cette poudre. Le mélange pulvérulent (poudre de verre + pigments) résultant (après évaporation le cas échéant du solvant de broyage) est par la suite mis en suspension dans un médium afin d'obtenir une composition (pâte) apte à être déposée sur un substrat.

La composition d'émail sous sa forme prête au dépôt, comprend généralement un médium permettant la mise à viscosité désirée pour l'application sur le substrat et permettant la liaison avec le substrat. Ce médium, choisi afin d'assurer une bonne mise en suspension des particules des frittes et pigments et devant se consumer au plus tard lors de la cuisson de l'émail, peut être tout médium ou liant organique habituellement utilisé dans les compositions d'émail traditionnelles et peut notamment comprendre des solvants, des diluants, des huiles telles que des huiles de pin et autres huiles végétales, des résines telles que des résines acryliques, des fractions de pétrole, des matières filmogènes telles que des matières cellulosiques, etc, la proportion de médium dans la composition prête à être déposée étant de préférence comprise entre 40 et 60 % en poids de ladite composition, de préférence entre 45 et 55 % en poids.

La composition d'émail avant dépôt sur l'article vitrocéramique selon l'invention, tel qu'une plaque, se présente donc généralement sous forme d'un mélange liquide-solide stable, de consistance pâteuse, de viscosité adaptée au procédé de dépôt (en particulier par sérigraphie).

L'épargne (partie non revêtue - par l'émail - au sein du revêtement émaillé) est par exemple réalisée en masquant la ou les zones concernées lors du dépôt de la composition d'émail à l'aide d'un masque que l'on retire après le dépôt, ou en obturant par exemple les mailles de l'écran de sérigraphie servant au dépôt de l'émail dans la ou les zones concernées, ou en ciblant précisément les zones à revêtir par jet d'émail, etc.

Comme indiqué dans la définition de l'invention, l'article selon l'invention comprend également au moins une zone diffusante (ou un diffuseur de lumière) en regard du revêtement en émail, la lumière émise par la ou les sources lumineuses passant par cette zone diffusante avant d'atteindre le motif à éclairer. Ce diffuseur se trouve généralement en face inférieure de la vitrocéramique. Cette zone diffusante permet notamment l'extraction du rayonnement émis par la ou les sources vers la zone d'éclairage voulue et est formée par exemple par un ou des éléments ou traitement(s) diffusants, en particulier se présente sous forme (ou est constituée en partie ou en totalité) d'au moins une couche (ou film, ou élément, notamment en polymère, par exemple en chlorure de polyvinyle (PVC), etc.), rapportée sur la surface de la vitrocéramique (par exemple collée en face inférieure) et/ou sur la surface d'un élément (tel qu'un guide d'ondes et/ou une source lumineuse, etc.) associé ou combiné à la vitrocéramique (par exemple l'élément diffusant étant déposé sur la source lumineuse, voire encapsulant ladite source), et/ou d'un traitement ou texturation différentielle de la surface concernée de la vitrocéramique (ou d 'un élément associé ou combiné), par exemple par attaque chimique (acide..) ou mécanique (sablage...), etc.

Cette zone diffusante est en particulier placée entre la source et la zone à éclairer et est généralement solidaire de la vitrocéramique et/ou éventuellement d'un autre élément associé ou combiné. Le cas échéant, la zone diffusante (ou moyen ou surface d'extraction) peut alternativement ou également être prévue dans l'épaisseur de la vitrocéramique (ou d'un élément associé ou combiné) le cas échéant, suivant par exemple une technologie de gravure interne par laser, etc.

L'article selon l'invention comprend également au moins une ou plusieurs sources lumineuses (leur nombre et leur disposition pouvant varier pour homogénéiser l'éclairage). La ou les sources peuvent être intégrées dans/couplées à une ou des structure(s) de type afficheur(s) (par exemple à diodes électroluminescentes dits « à 7 segments »), à un bandeau de commande électronique à touches sensitives et affichage digital, etc. Comme déjà évoqué, les sources lumineuses sont avantageusement formées par des diodes électroluminescentes, plus ou moins espacées, éventuellement associées à un ou plusieurs guides optiques comme mentionné ultérieurement. Les diodes sont avantageuses dans la présente invention en terme notamment d'encombrement, d'efficacité, de pérennité et de résistance aux conditions environnantes (chaleur...).

Les diodes peuvent être encapsulées, c'est-à-dire comprendre un composant semi-conducteur et une enveloppe (par exemple en résine type époxy ou nylon ou silicone), encapsulant le composant semi-conducteur. Les diodes peuvent aussi être des puces semi-conductrices sans lentilles de collimation par exemple de taille de l'ordre de la centaine de µm ou du mm, éventuellement avec une encapsulation minime (par exemple de protection).

Les diodes peuvent être portées par un support ou barrette ou embase, cette embase pouvant présenter une surface (plane ou inclinée) traitée et/ou rendue réfléchissante pour une meilleure efficacité lumineuse, par exemple revêtue d'une laque ou peinture et/ou couche miroir, et/ou couplée à un réflecteur blanc ou métallique pour mieux diriger le rayonnement émis.

L'assemblage de la ou des sources (à la plaque ou à un autre constituant de l'article comme par exemple le bandeau de commande) peut se faire par soudure, clipsage, collage, etc, le cas échéant par l'intermédiaire d'un autre élément ; par exemple, on peut monter des diodes, soudées sur un support lui-même logé au fond d'un profilé métallique, par clipsage ou collage du profilé. Le positionnement de la ou des sources (par rapport à la plaque notamment) est adapté pour permettre un affichage au travers de la vitrocéramique.

Les sources, ainsi que leur alimentation et actionnement, peuvent être dissociés ou non de façon à permettre un éclairage simultané ou séparé des zones d'éclairage voulues selon les besoins.

La ou les sources lumineuses peuvent être déclenchées par tout système de commande, par exemple par bouton(s) électromécanique(s) ou par touches sensitives, en particulier la ou les sources lumineuses peuvent être actionnées suivant un mécanisme capacitif par le positionnement d'un doigt sur la vitrocéramique à l'emplacement de (ou sur) la zone d'activation appropriée, cette zone d'activation étant signalée en surface de la vitrocéramique et correspondant en particulier à la zone lumineuse (destinée à être éclairée) précitée selon l'invention. Le touché du doigt (conducteur d'électricité) modifie la capacité, des charges électriques lui étant transférées, le changement de capacité étant détecté par des systèmes de mesure, ces derniers notamment déclenchant l'activation de la ou des sources lumineuses associées.

Comme déjà évoqué, l'article peut comprendre, outre la ou les sources, au moins un guide d'onde destiné à propager la lumière d'une partie à l'autre de l'article (en particulier par réflexion totale interne ou par réflexion métallique), la source lumineuse étant alors rattachée au guide et coopérant avec celui-ci en émettant en son sein son rayonnement lumineux afin que le guide le transmette, la ou les sources lumineuses émettant/étant couplées par exemple par la tranche ou chant du guide. Ce guide est avantageusement clair ou transparent, et est généralement rapporté (assemblé après avoir été conçu séparément) sur la face inférieure du substrat. Il peut être organique et/ou plastique (par exemple en polycarbonate ou polyméthacrylate de méthyle PMMA), ou minéral, et est de préférence minéral ; en particulier, il s'agit d'un verre. L'article selon l'invention peut comprendre plusieurs guides dédiés chacun à une ou plusieurs zones lumineuses, ou un guide unitaire, pourvu le cas échéant d'ouvertures. Le guide peut être solidarisé au substrat par collage et/ou clipsage, ou par encapsulation, etc. L'assemblage du guide peut se faire directement sur le substrat ou sur une autre partie de l'article ou d'un support sur lequel est monté l'article, par exemple le guide peut être solidarisé au caisson d'un appareil de cuisson sur lequel le substrat est monté (le caisson pouvant le cas échéant faire partie de l'article). Le guide permet, entre autres, de mieux conduire la lumière jusqu'aux zones d'éclairage voulues, en particulier lorsque le substrat est de couleur sombre. Le cas échéant, la géométrie et la rugosité du bord d'un guide d'onde peuvent également être travaillées pour permettre une extraction locale et contrôlée de la lumière.

L'article selon l'invention peut être avantageusement une plaque de cuisson, ou un article en vitrocéramique présentant un affichage ou au moins une zone lumineuse à caractère fonctionnel ou décoratif, voire un article ou module ou ensemble ou système (à vocation principale) d'affichage (décoratif et/ou fonctionnel).

Par articles (en) vitrocéramiques, on entend non seulement les articles réalisés en vitrocéramique proprement dite mais également les articles en tout autre matériau analogue convenant pour les mêmes applications (par exemple un verre renforcé ou non), en particulier résistant à haute température et/ou présentant notamment un coefficient de dilatation nul ou quasi-nul (par exemple inférieur à 15.10⁻⁷ K⁻¹, comme dans le cas des plaques vitrocéramiques utilisées avec des feux radiants). De préférence cependant, il s'agit d'un article en vitrocéramique proprement dite.

De préférence, l'article selon l'invention est formé (comme substrat) d'une plaque vitrocéramique (d'épaisseur généralement comprise entre 3 et 4 mm, notamment de l'ordre de 4 mm), plane, ou majoritairement ou quasiment plane (en particulier avec une flèche inférieure à 0,1% de la diagonale de la plaque, et de préférence de l'ordre de zéro), et est destiné à servir de plaque de cuisson. Une telle plaque est généralement destinée à être intégrée dans une table de cuisson ou cuisinière comprenant ladite plaque et des éléments chauffants, par exemple des foyers radiants ou halogènes ou des éléments de chauffage par induction.

La plaque présente généralement une face "supérieure" (face visible) en position d'utilisation, une autre face "inférieure" (souvent cachée, dans le châssis ou caisson d'une cuisinière par exemple) en position d'utilisation, et une tranche (ou chant ou épaisseur). La face supérieure est généralement plane et lisse mais peut aussi présenter au moins une zone en relief et/ou au moins une zone en creux et/ou au moins une ouverture (par exemple si la plaque incorpore une ouverture destinée à recevoir un brûleur à gaz atmosphérique). La face inférieure peut être notamment lisse ou munie de picots augmentant sa résistance mécanique et obtenus par exemple par laminage. Le cas échéant, dans le cas de picots, une résine d'indice peut être appliquée sur la surface inférieure afin de la lisser, si nécessaire.

Dans un mode de réalisation de l'invention, la zone lumineuse mentionnée selon l'invention se trouve au sein d'un relief en bosse(s) et/ou de préférence en creux, notamment (de dimensions) tel(les) qu'il permet un repérage tactile de ladite zone, le relief se présentant par exemple sous forme de motif(s) géométrique(s). Ce type de relief est réalisable par meulage ou polissage de la vitrocéramique, ou sans qu'il soit nécessaire de mettre en oeuvre une étape supplémentaire spécifique en adaptant la géométrie du support ou des surfaces de moulage ou pressage auxquels la plaque doit se conformer. La facilité du repérage tactile est aisément obtenue par un choix judicieux de la géométrie du relief. Afin de garantir un repérage tactile dans les meilleures conditions, la hauteur du relief peut être par exemple au moins égale à 0.1 mm, de préférence à au moins 0.2 mm, cette hauteur n'excédant par exemple 2 mm, en particulier étant inférieure à 1 mm. Par « hauteur» du relief, on entend sa dimension dans la direction perpendiculaire au plan de la plaque, c'est-à-dire le dénivelé entre son point le plus haut et son point le plus bas.

Selon un mode de réalisation avantageux, l'environnement du relief de repérage sur la plaque présente un état de surface essentiellement lisse, dont ledit relief constitue une variation continue. La plaque peut être mise en forme, notamment dans la zone concernée, par une opération d'effondrement, de moulage ou de pressage, avec utilisation d'un support ou de surfaces de moulage ou pressage ayant la géométrie désirée, l'effondrement, le moulage ou le pressage pouvant être effectués à tout moment d'un procédé classique de fabrication d'une plaque vitrocéramique, pourvu que le rnatériau qui la constitue ait une température suffisamment élevée pour en permettre la déformation plastique.

L'article selon l'invention est en particulier à base de toute vitrocéramique ayant, de manière intrinsèque, une transmission lumineuse allant de 0.8% à 40%, de préférence de 0.8 % à 5%, en particulier de 0.8 à 2%, et une transmission optique (déterminée de façon connue en faisant le rapport entre l'intensité transmise et l'intensité incidente à une longueur d'onde donnée) d'au moins 3.5% pour une longueur d'onde de 625 nm comprise dans le domaine du visible. Par « de manière intrinsèque», on entend que la plaque possède une telle transmission en elle-même, sans la présence d'un quelconque revêtement. La transmission lumineuse est mesurée selon la norme ISO 9050 :2003 (mentionnant également la transmission optique) en utilisant l'illuminant D65, et est la transmission totale (notamment intégrée dans le domaine du visible et pondérée par la courbe de sensibilité de l'oeil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003.

L'invention s'applique de façon particulièrement avantageuse aux plaques sombres, notamment d'aspect noir ou brun, présentant de tels critères de transmission, mais la vitrocéramique utilisée présentant de tels critères peut également être une vitrocéramique claire, la solution selon l'invention étant adaptée pour toute cette gamme de plaques, de façon simple et sans risquer d'altérer d'autres propriétés des plaques.

L'article selon l'invention peut comporter le cas échéant d'autres éléments et/ou couches que les constituants précités. Par exemple, dans le cas d'un module de cuisson, l'article peut être muni de (ou associée avec des) élément(s) fonctionnel(s) ou de décor supplémentaire(s) (cadre, connecteur(s), câble(s), élément(s) de commande), etc. Il peut comporter divers revêtements fonctionnels et/ou décoratifs, à base d'émail, de peinture, etc. Par exemple, l'une des faces du substrat peut comporter une couche d'au moins un autre émail, par exemple de décoration, ou de masquage (pour éviter par exemple la vision directe des sources), etc.

L'invention concerne aussi les appareils (ou dispositifs) de cuisson et/ou de maintien à haute température comportant au moins un article selon l'invention (par exemple cuisinières, tables de cuisson encastrables, fours, etc) et comportant, le cas échéant, un ou plusieurs éléments chauffants tels qu'un ou plusieurs éléments radiants ou halogènes et/ou un ou plusieurs brûleurs à gaz atmosphérique et/ou un ou plusieurs moyens de chauffage par induction. L'article selon l'invention peut également consister en un appareil de cuisson comportant un ou plusieurs éléments chauffants outre les éléments précités dans la définition de l'invention. L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux (feux à gaz, feux radiants, halogènes ou à induction).

L'appareil de cuisson, outre les éléments internes de chauffage, comprend aussi généralement des moyens de commande et/ou de contrôle, les éléments internes étant recouverts par le substrat vitrocéramique, l'affichage ou la ou les zones lumineuses étant vu(s) au travers dudit substrat.

Le revêtement en émail et la zone diffusante peuvent être ajoutés au substrat vitrocéramique selon les cas avant et/ou après céramisation du verre précurseur (ou verre-mère ou green glass) pour obtenir le substrat vitrocéramique. Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

L'émail utilisé selon l'invention permet le dépôt en aussi peu de passes que possible sur une faible épaisseur, ce qui permet d'éviter que l'émail s'écaille et endommage mécaniquement la plaque vitrocéramique. Le substrat est généralement revêtu par sérigraphie sur sa face supérieure dans la ou les zones appropriées avec une pâte comprenant la composition à l'aide d'écrans de sérigraphie (composés par exemple de tissus de fils en polyester ou polyamide), soit avant céramisation, soit après céramisation, puis séché aux alentours de 100-150°C.

Avantageusement, le substrat revêtu de l'émail sélectionné (obtenu après cuisson) présente une opacité telle qu'elle permet notamment le masquage d'éléments sous-jacents. L'opacité est évaluée en mesurant (colorimétrie en réflexion effectuée à l'aide d'un colorimètre Byk-Gardner Color Guide 45/0) la variation de couleur ΔE*, correspondant à la différence entre la couleur, mesurée sur la face du substrat opposée à la face portant l'émail, pour le substrat posé sur fond blanc opaque et celle pour le substrat posé sur fond noir opaque (ΔE* = ((L_{B}*-L_{N}*)² + (a_{B}*-a_{N}*)² + (b_{B}*-b_{N}*)²)^{½} selon la formule établie en 1976 par la CIE, L_{B}*,a_{B}*,b_{B}* étant les coordonnées colorimétriques de la première mesure sur fond blanc et L_{N}*,a_{N}*,b_{N}* étant celles de la seconde mesure sur fond noir). Avantageusement, le substrat vitrocéramique revêtu de l'émail selon l'invention présente une valeur de ΔE* inférieure ou égale à 0.5, de préférence inférieure ou égale à 0.4, notamment inférieure à 0.1. En outre, l'émail utilisé présente avantageusement une valeur de L* inférieure à 25, voire à 21, et de préférence comprise entre 12 et 18, cette valeur traduisant une absence de porosité de l'émail sur le substrat verrier.

De préférence, l'article selon l'invention comprend au moins une zone lumineuse destinée à mettre en évidence l'état de marche ou non d'au moins une zone de chauffe (zone appelée zone ON/OFF, l'épargne dessinant le motif à éclairer de ladite zone étant par exemple sous forme d'un pictogramme symbolisant la mise en marche). L'article selon l'invention comprend ainsi préférentiellement un émail tel que défini selon l'invention déposé par exemple par sérigraphie en phase supérieure dans ladite zone, ce revêtement émaillé étant par exemple en forme de disque au centre duquel une épargne est réalisée selon le motif choisi (tel que le motif ON /OFF précité). Ce motif signale par exemple qu'il s'agit de la touche de contrôle ON/OFF, située par exemple sur le bandeau de commande, l'activation de cette touche se faisant par exemple suivant un mécanisme capacitif par le positionnement d'un doigt sur la vitrocéramique sur ladite touche. L'activation de celle-ci allume une LED émettant une lumière (par exemple de couleur rouge). La lumière émise par cette LED est diffusée au moyen de la zone diffusante située au dessus de la source lumineuse, cette zone étant par exemple de forme cylindrique (ou circulaire ou en forme de disque, le diamètre correspondant par exemple à celui du disque sérigraphié en face supérieure). Ce disque diffusant est par exemple collé sur la face inférieure de la vitrocéramique. Si la lumière de la LED est diffusée en dessous du rond sérigraphié ON / OFF, alors la lumière rouge apparait au niveau de la zone épargnée.

La présente invention et ses avantages seront mieux compris à la lecture de l'exemple qui suit, uniquement donné à titre illustratif et non limitatif.

### Exemple selon l'invention.

Dans cet exemple, l'article réalisé est un module de cuisson plan comprenant une plaque vitrocéramique (substrat) noire translucide, commercialisée sous la référence KeraBlack+ ou KeraVision par la société Eurokera, cette plaque présentant une face supérieure lisse et une face inférieure lisse, l'article comprenant en outre une source lumineuse fixée sous la plaque contre celle-ci.

On utilise comme source lumineuse, une diode électroluminescente (LED), commercialisée sous la référence diode LED AlInGaP 5 mm Avago par la Société Avago, positionnée sous la plaque. En outre, on dépose par sérigraphie en face supérieure de la plaque, au niveau du bandeau de commande et à l'aplomb de la source lumineuse, un émail composé de 50% de fritte de verre de composition suivante : SiO₂ : 47.6% ; Al₂O₃ : 5.0%; Li₂O : 3.6% ; B₂O₃ : 40% ; Na₂O : 2.5 ; K₂O : 1.4%, et composé de 50% en poids de pigments noirs (à base de spinelles de chrome-cuivre) commercialisés sous la référence V7709 par la société Ferro, l'épaisseur de l'émail déposé étant comprise entre 2.5 et 5 µm. Ce dépôt est effectué sous forme d'un disque et une épargne en forme de pictogramme indiquant l'activation est pratiquée dans ce dépôt émaillé à l'aide de masques correspondants dans l'écran de sérigraphie servant au dépôt. Le motif créé signale qu'il s'agit d'une zone de commande (zone ON/OFF), l'activation de cette zone se faisant suivant un mécanisme capacitif.

En outre, on utilise comme zone diffusante une pastille de chlorure de polyvinyle (PVC) de 5 mm d'épaisseur que l'on colle sous la vitrocéramique ou sur la source lumineuse (cette source pouvant être le cas échéant encapsulée dans le PVC).

La plaque de verre mère ainsi décorée est ensuite céramisée en opérant un chauffage rapide jusqu'à 650 °C, puis un chauffage jusqu'à environ 820°C à une vitesse de chauffe d'environ 15°C/min, puis un chauffage jusqu'à la température maximale de cristallisation (entre 900 et 950°C environ) à une vitesse de chauffe de quelques degrés par minutes, un maintien à cette dernière température pendant quelques minutes, puis un refroidissement dans le four, la cuisson de l'émail intervenant pendant la céramisation. Après céramisation et cuisson des émaux, la lumière de la led de la touche de contrôle ON/OFF disposée sous la vitrocéramique au niveau du motif ON/OFF diffuse uniquement dans la zone épargnée permettant une définition satisfaisante du motif ON / OFF.

### Exemple de référence :

On remplace l'émail précédent par un émail composé de 70% de fritte de verre de composition suivante: SiO₂ : 41.7%; Al₂O₃ : 18.5%; Li₂O :2.1% ; B₂O₃ : 28.0% ; Na₂O : 0.9% ; K₂O : 3.5%, CaO : 2.8% et composé de 30% en poids de pigments noirs à base de CoSi commercialisés par la société Ferro sous la référence 220946. Après céramisation et cuisson des émaux, la lumière de la led de la touche de contrôle ON/OFF disposée sous la vitrocéramique au niveau du motif ON/OFF diffuse dans l'émail empêchant une définition satisfaisante du motif ON / OFF. En outre, la fritte utilisée présente un point de ramollissement (590°C) trop élevé comparé à celui de la fritte de l'exemple selon l'invention (515°C), la teneur en pigment pouvant être associée à cette fritte étant limitée sous peine d'obtenir un émail ne permettant pas un bon nappage sur la surface de la vitrocéramique.

Les articles, en particulier plaques, selon l'invention peuvent notamment être utilisées avec avantage pour réaliser une nouvelle gamme de plaques de cuisson pour cuisinières ou tables de cuisson.

## Revendications

1. Article en vitrocéramique, en particulier plaque vitrocéramique, destiné(e) en particulier à couvrir ou recevoir des éléments de chauffage, ledit article étant pourvu d'au moins une zone lumineuse, en particulier d'affichage, comprenant au moins un motif lumineux, ledit article comprenant au moins un substrat vitrocéramique, au moins une source lumineuse, et au moins un revêtement en émail recouvrant au moins une partie de ladite zone et au sein duquel une épargne est réalisée à la forme dudit motif, la composition dudit émail comprenant au moins une fritte de verre et au moins un pigment, la fritte de verre comprenant les constituants suivants:
| | |
|---|---|
| SiO₂ | 40 - 55% |
| Al₂O₃ | 0 - 10% |
| B₂O₃ | 25 - 55% |
| Na₂O | 0 - 5% |
| K₂O | 0 - 5% |
| Li₂O | 0 - 10%, |
le taux de pigment(s) étant en outre de 40 à 65 % en poids du mélange fritte/pigments, l'article comprenant en outre une zone diffusante en regard du revêtement en émail.

2. Article en vitrocéramique selon la revendication 1, **caractérisé en ce que** la fritte de verre est constituée de :
| | |
|---|---|
| SiO₂ | 45 - 50 % |
| Al₂O₃ | 3 - 6 % |
| B₂O₃ | 27 - 45 % |
| Na₂O | 2 - 3 % |
| K₂O | 1 - 2 % |
| Li₂O | 3 - 5 %. |

3. Article en vitrocéramique selon l'une des revendications 1 ou 2, **caractérisé en ce que** le revêtement en émail est déposé sur une face du substrat, en particulier en face supérieure de la vitrocéramique, la zone diffusante étant sur la face opposée du substrat et étant en particulier approximativement de la même forme et/ou dimension que le revêtement émaillé.

4. Article en vitrocéramique selon l'une des revendications 1 à 3, **caractérisé en ce que** la ou les sources lumineuses sont actionnées suivant un mécanisme capacitif par le positionnement d'un doigt sur la vitrocéramique à l'emplacement de la zone d'activation appropriée, cette zone d'activation étant signalée en surface de la vitrocéramique et correspondant en particulier à la zone lumineuse.

5. Article en vitrocéramique selon l'une des revendications 1 à 4, **caractérisé en ce que** la zone lumineuse se trouve au sein d'un relief en bosse(s) et/ou en creux, notamment tel qu'il permet un repérage tactile de ladite zone, le relief se présentant par exemple sous forme de motif(s) géométrique(s).

6. Article en vitrocéramique selon l'une des revendications 1 à 5, **caractérisé en ce qu'**il comprend un substrat présentant une transmission lumineuse allant de 0.8% à 40%, de préférence de 0.8 % à 5%, en particulier de 0.8 à 2%, et une transmission optique d'au moins 3.5% pour une longueur d'onde de 625 nm.

7. Article vitrocéramique selon l'une des revendications 1 à 6, **caractérisé en ce que** ledit article ou ledit substrat est une plaque de cuisson.

8. Article vitrocéramique selon l'une des revendications 1 à 7, **caractérisé en ce qu'**il comprend au moins une zone lumineuse, située par exemple sur le bandeau de commande, destinée à mettre en évidence l'état de marche ou non d'au moins une zone de chauffe, le revêtement émaillé étant par exemple en forme de disque au centre duquel une épargne est réalisée selon un motif signalant qu'il s'agit d'une touche de contrôle, l'activation de cette touche se faisant par exemple suivant un mécanisme capacitif par le positionnement d'un doigt sur ladite touche, la zone diffusante étant située au-dessus de la source lumineuse et étant par exemple de forme circulaire correspondant par exemple à celle du revêtement sérigraphié.

9. Article selon l'une des revendications 1 à 8, ou dispositif de cuisson et/ou de maintien à haute température comportant un article selon l'une des revendications 1 à 8, et comportant un ou plusieurs éléments chauffants tels qu'un ou plusieurs éléments radiants ou halogènes et/ou un ou plusieurs brûleurs à gaz atmosphérique et/ou un ou plusieurs moyens de chauffage par induction.

## Patentansprüche

1. Glaskeramikgegenstand, insbesondere Glaskeramikplatte, die insbesondere dazu vorgesehen ist, Heizelemente zu bedecken oder aufzunehmen, wobei der Gegenstand mit mindestens einem Leuchtfeld, insbesondere einem beleuchteten Anzeigefeld, versehen ist, das mindestens ein Leuchtmotiv umfasst, wobei der Gegenstand mindestens ein Glaskeramiksubstrat, mindestens eine Lichtquelle und mindestens eine Emaillebeschichtung umfasst, die mindestens einen Teil des Feldes bedeckt und in deren Innerem eine Aussparung in Form des Motivs hergestellt ist, wobei die Zusammensetzung der Emaille mindestens eine Glasfritte und mindestens ein Pigment umfasst, wobei die Glasfritte die folgenden Bestandteile umfasst:
| | |
|---|---|
| SiO₂ | 40 - 55% |
| Al₂O₃ | 0 - 10% |
| B₂O₃ | 25 - 55% |
| Na₂O | 0 - 5% |
| K₂O | 0 - 5% |
| Li₂O | 0 - 10%, |
wobei der Anteil an Pigment(en) außerdem 40 bis 65 Gew.-% des Fritte/Pigment-Gemischs beträgt, wobei der Gegenstand außerdem eine der Emaillebeschichtung zugewandte streuende Zone umfasst.

2. Glaskeramikgegenstand nach Anspruch 1, **dadurch gekennzeichnet, dass** die Glasfritte aus Folgendem besteht:
| | |
|---|---|
| SiO₂ | 40 - 50% |
| Al₂O₃ | 3 - 6% |
| B₂O₃ | 27 - 45% |
| Na₂O | 2 - 3% |
| K₂O | 1 - 2% |
| Li₂O | 3 - 5%. |

3. Glaskeramikgegenstand nach einem der Ansprüche 1 oder 2, **dadurch gekennzeichnet, dass** die Emaillebeschichtung auf eine Fläche des Substrats, insbesondere auf die obere Fläche der Glaskeramik, aufgebracht wird, wobei sich die streuende Zone auf der gegenüberliegenden Fläche des Substrats befindet und insbesondere etwa von der gleichen Form und/oder Abmessung wie die Emaillebeschichtung ist.

4. Glaskeramikgegenstand nach einem der Ansprüche 1 bis 3, **dadurch gekennzeichnet, dass** die Lichtquelle(n) gemäß einem kapazitiven Mechanismus durch die Positionierung eines Fingers auf der Glaskeramik an der Stelle der entsprechenden Aktivierungszone angetrieben wird/werden, wobei diese Aktivierungszone in der Oberfläche der Glaskeramik gekennzeichnet ist und insbesondere dem Leuchtfeld entspricht.

5. Glaskeramikgegenstand nach einem der Ansprüche 1 bis 4, **dadurch gekennzeichnet, dass** sich das Leuchtfeld im Inneren eines Reliefs mit (einer) Ausbuchtung(en) oder Vertiefung befindet, insbesondere derart, dass es ein taktiles Aufspüren des Feldes ermöglicht, wobei das Relief zum Beispiel in Form eines geometrischen Motivs bzw. von geometrischen Motiven vorliegt.

6. Glaskeramikgegenstand nach einem der Ansprüche 1 bis 5, **dadurch gekennzeichnet, dass** er ein Substrat umfasst, das eine Lichttransmission von 0,8% bis 40%, vorzugsweise von 0,8% bis 5%, insbesondere von 0,8% bis 2% und eine optische Transmission von mindestens 3,5% bei einer Wellenlänge von 625 nm aufweist.

7. Glaskeramikgegenstand nach einem der Ansprüche 1 bis 6, **dadurch gekennzeichnet, dass** der Gegenstand oder das Substrat eine Kochplatte ist.

8. Glaskeramikgegenstand nach einem der Ansprüche 1 bis 7, **dadurch gekennzeichnet, dass** er mindestens ein Leuchtfeld umfasst, das sich zum Beispiel auf dem Bedienelement befindet und dazu dient anzuzeigen, ob mindestens eine Heizzone sich in einem Betriebszustand befindet oder nicht, wobei die Emaillebeschichtung zum Beispiel die Form einer Scheibe hat, in deren Mitte eine Aussparung in einem Motiv hergestellt ist, das anzeigt, dass es sich um eine Kontrolltaste handelt, wobei die Aktivierung dieser Taste zum Beispiel gemäß einem kapazitiven Mechanismus durch die Positionierung eines Fingers auf dieser Taste erfolgt, wobei die streuende Zone sich über der Lichtquelle befindet und zum Beispiel eine kreisförmige Form hat, die zum Beispiel derjenigen der Siebdruckbeschichtung entspricht.

9. Gegenstand nach einem der Ansprüche 1 bis 8 oder Kochgerät und/oder Gerät zum Halten bei hoher Temperatur, das einen Gegenstand nach einem der Ansprüche 1 bis 8 umfasst, und der/das ein oder mehrere Heizelemente, wie ein oder mehrere Strahlungs- oder Halogenelemente und/oder einen oder mehrere atmosphärische Gasbrenner und/oder ein oder mehrere Induktionsheizmittel, umfasst.

## Claims

1. A vitroceramic article, in particular a vitroceramic plate, intended in particular to cover or receive heating elements, said article being provided with at least one luminous zone, in particular for display, comprising at least one luminous pattern, said article comprising at least one vitroceramic substrate, at least one light source, and at least one enamel coating which covers at least a part of said zone and within which an uncovered region is formed in the shape of said pattern, the composition of said enamel comprising at least one glass frit and at least one pigment, the glass frit comprising the following constituents:
| | |
|---|---|
| SiO₂ | 40 - 55% |
| Al₂O₃ | 0 - 10% |
| B₂O₃ | 25 - 55% |
| Na₂O | 0 - 5% |
| K₂O | 0 - 5% |
| Li₂O | 0 - 10%, |
the rate of pigment or pigments further being from 40 to 65% by weight of the frit/pigment mixture, the article furthermore comprising a diffusing zone facing the enamel coating.

2. The vitroceramic article as claimed in claim 1, **characterized in that** the glass frit consists of:
| | |
|---|---|
| SiO₂ | 45 - 50% |
| Al₂O₃ | 3 - 6% |
| B₂O₃ | 27 - 45% |
| Na₂O | 2 - 3% |
| K₂O | 1 - 2% |
| Li₂O | 3 - 5%. |

3. The vitroceramic article as claimed in one of claims 1 and 2, **characterized in that** the enamel coating is deposited on one face of the substrate, in particular on the upper face of the vitroceramic, the diffusing zone being on the opposite face of the substrate and being, in particular, approximately of the same shape and/or size as the enameled coating.

4. The vitroceramic article as claimed in one of claims 1 to 3, **characterized in that** the light source or sources are actuated according to a capacitive mechanism by placing a finger on the vitroceramic at the location of the suitable activation zone, this activation zone being indicated on the surface of the vitroceramic and corresponding, in particular, to the luminous zone.

5. The vitroceramic article as claimed in one of claims 1 to 4, **characterized in that** the luminous zone lies within a relief of one or more elevations and/or depressions, particularly in such a way that it allows location of said zone by touch, the relief being for example in the form of one or more geometrical patterns.

6. The vitroceramic article as claimed in one of claims 1 to 5, **characterized in that** it comprises a substrate having a luminous transmission ranging from 0.8% to 40%, preferably from 0.8% to 5%, in particular from 0.8 to 2%, and an optical transmission of at least 3.5% for a wavelength of 625 nm.

7. The vitroceramic article as claimed in one of claims 1 to 6, **characterized in that** said article or said substrate is a cooking plate.

8. The vitroceramic article as claimed in one of claims 1 to 7, **characterized in that** it comprises at least one luminous zone lying, for example, on the control panel and intended to indicate whether at least one heating zone is on or off, the enameled coating being for example in the form of a disk, at the center of which an uncovered region is formed according to a pattern indicating that it is a control button, the activation of this button being carried out for example according to a capacitive mechanism by placing a finger on said button, the diffusing zone being located above the light source and having, for example, a circular shape corresponding for example to that of the screen-printed coating.

9. The article as claimed in one of claims 1 to 8, or device for cooking and/or for maintaining at high temperature, having an article as claimed in one of claims 1 to 8, and having one or more heating elements such as one or more radiating or halogen elements and/or one or more atmospheric gas burners and/or one or more induction heating means.
